# EUROPEAN PATENT APPLICATION

(11) **EP 3 584 196 A1**
(43) Date of publication of application: **25.12.2019**
(21) Application number: 17897080.2
(22) Date of filing: 09.11.2017
(51) Int. Cl.: B65F 5/00, B09B 3/00, B65F 1/00, B65F 1/14, B65F 9/00

(54) **ARTICLE RECOVERY DEVICE**

(30) Priority: 14.02.2017 JP 2017025337; 14.02.2017 JP 2017025346
(71) Applicant: Teraoka Seiko Co., Ltd., Tokyo 146-8580 (JP)
(72) Inventor: TOMOSAWA, Issei, Tokyo 146-8580 (JP); SAITO, Masakazu, Tokyo 146-8580 (JP); YASUDA, Takeomi, Tokyo 146-8580 (JP)
(74) Representative: Wood, Graham
(86) International application number: PCT/JP2017/040389
(87) International publication number: WO 2018/150657

(57) **Abstract**

Provided is a compact article recovery device which has a simple structure, determines whether an introduced object to be recovered, without taking the object into a device main body, does not accommodate, in the device main body, objects which are not the object to the recovered, and only accommodates the object to be recovered in the device main body. This article recovery device (100) is provided with: a device main body (100B) provided with an accommodation part (140) for accommodating articles; a placement part (116) in which the articles can be placed; and outer door (111) provided to the outside of the placement part; an inner door (112) provided to a passage (71) which passes from the placement part to the accommodation part in the device main body; an inner door drive unit (6) for driving the opening and closing of the inner door; detection means (7, 8, 9) which are provided to the placement part, and which detect an article placed in the placement part; and a control unit (1). The control unit is provided with a determination unit for determining whether the article is the object to be recovered, on the basis of detection results from the detection means.

## Description

### [Technical Field]

The present invention relates to an article collection device.

### [Background Art]

An empty container collection device for collecting an empty container has been known (see, for example, PTL 1).

### [Citation List]

### [Patent Literature]

[PTL 1] Japanese Patent Application Publication No. 2009-175789

### [Summary of Invention]

### [Technical Problem]

However, when an article collection device such as an empty container collection device is installed in a small store such as a convenience store, an installation site is narrow, and hence the article collection device is desired to be downsized.

The conventional empty container collection device has a structure in which an article charged from a charging port is taken into a device main body via a conveyor belt, it is determined in the device main body whether the article is a collection object by using a light sensor or a metal sensor, and when the article is a collection object, the collection object is stored in a storage part in the device, and when the object is a non-collection object, the non-collection object is ejected to the outside through the device main body, or has a structure in which the non-collection object is conveyed in an ejection direction via a conveyor belt and ejected to the outside of the device through a charging port. Thus, the conventional empty container collection device is a large-sized device having a complicated structure.

An empty container collection device configured such that an outer door and an inner door are provided to a container charging part, and when a foreign object (non-collection object) other than a collection object is charged in the container charging part, the foreign object is not collected and the outer door is maintained to be in an opened condition while the inner door is maintained to be in a closed condition has a fear in that when the foreign object is left for a long period of time, another foreign object may be charged or rainwater may flow in the device because the outer door is in the opened condition, which causes a failure or a trouble.

### [Solution to Problem]

An article collection device in the present invention has at least the following configuration.

The article collection device includes:
a device main body including a storage part for storing an article therein;
a placing part capable of placing an article thereon;
an outer door provided on an outer side of the placing part;
an inner door provided in a passage passing from the placing part to a container storage part in the device main body;
an inner door driving part for driving the inner door to be opened and closed;
detection means provided to the placing part, for detecting an article placed on the placing part; and
a control part,
in which the control part includes a determination part for determining whether the article is a collection object on the basis of a detection result of the detection means.

### [Advantageous Effects of Invention]

According to the present invention, there can be provided the article collection device having a simple structure, which is capable of determining whether a charged article is a collection object without taking the article into the device main body, and when the article is the non-collection object, storing only a collection object in the storage part in the device main body without storing the non-collection object in the device main body. Further, the compact article collection device can be provided.

According to the present invention, there can be provided the article collection device configured such that, when a non-collection object such as a foreign object is charged in the container charging part, after a predetermined time has elapsed, the condition of the outer door becomes the closed condition, which can prevent mixture of another foreign object. Further, there can be provided the article collection device that prevents a failure or a trouble due to the flowing-in of rainwater.

### [Brief Description of Drawings]

[Fig. 1]

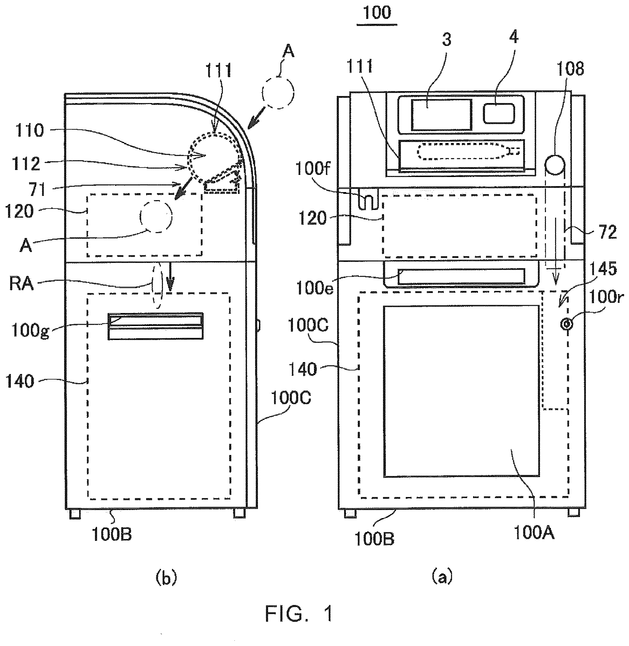

   Fig. 1 is an overall conceptual view of a container collection device as an article collection device according to an embodiment of the present invention, in which Fig. 1 at (a) is a front view of the container collection device, and Fig. 1 at (b) is a side view of the container collection device.
[Fig. 2]

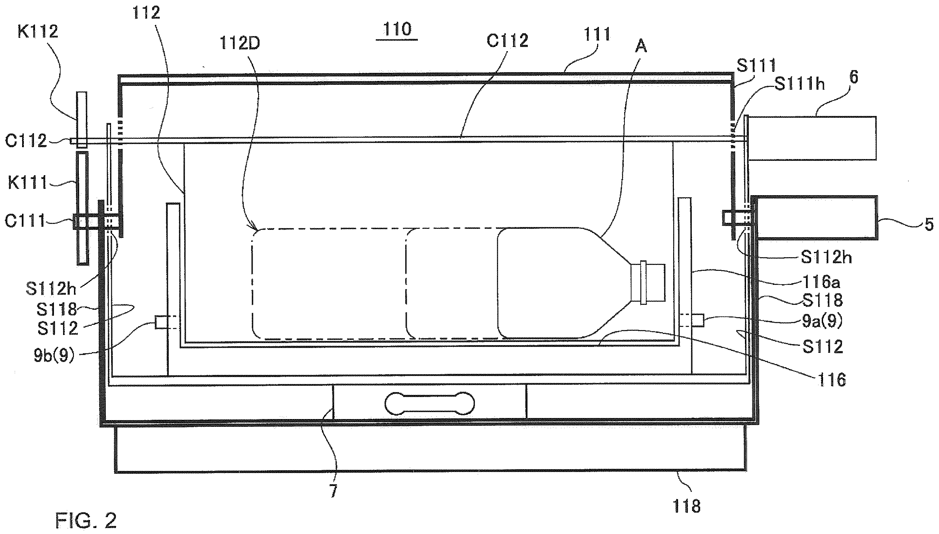

   Fig. 2 is a conceptual view of a container charging part in the article collection device (container collection device) according to the embodiment of the present invention.
[Fig. 3]

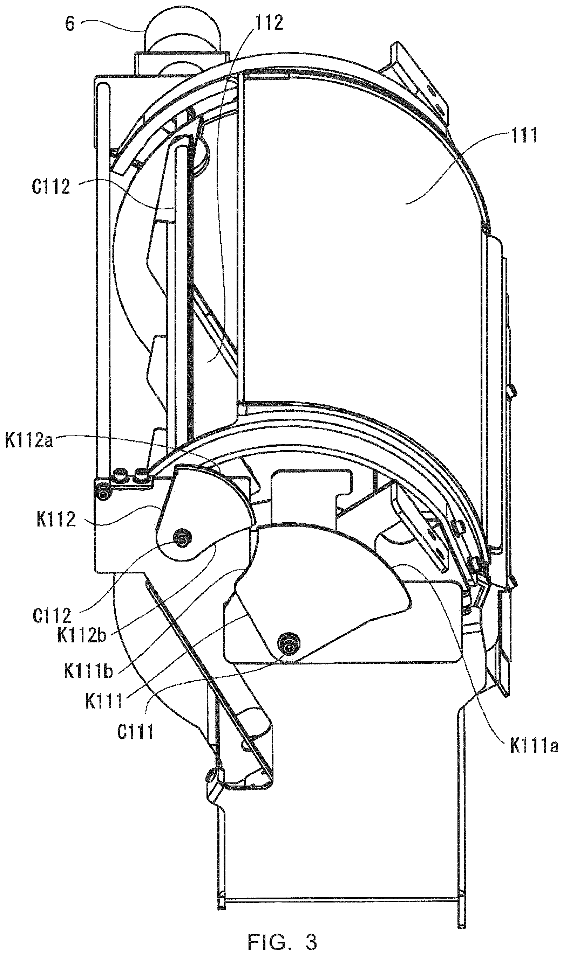

   Fig. 3 is a perspective view illustrating an example of the article collection device (container collection device) in which an outer door is in a closed condition and an inner door is in a closed condition.
[Fig. 4]

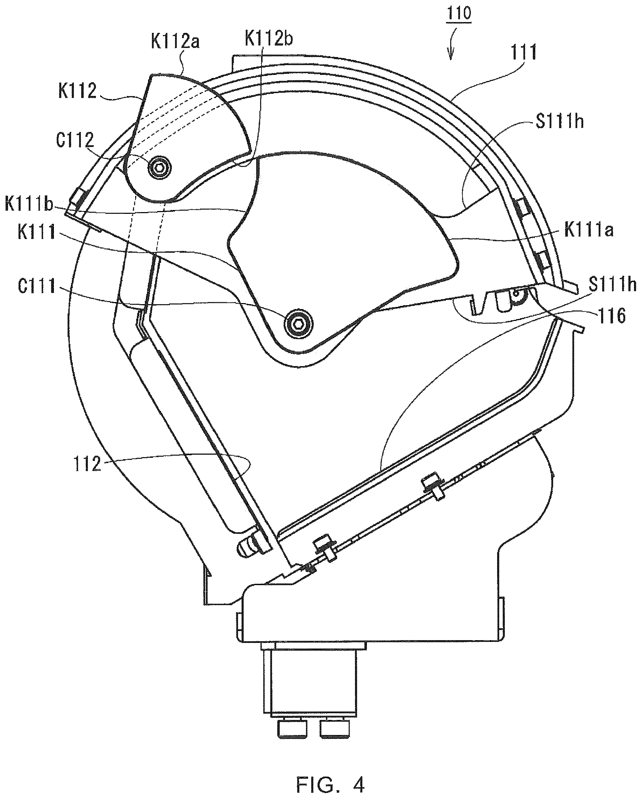

   Fig. 4 is a conceptual side view illustrating an example of the article collection device (container collection device) in which the outer door is in the closed condition and the inner door is in the closed condition.
[Fig. 5]

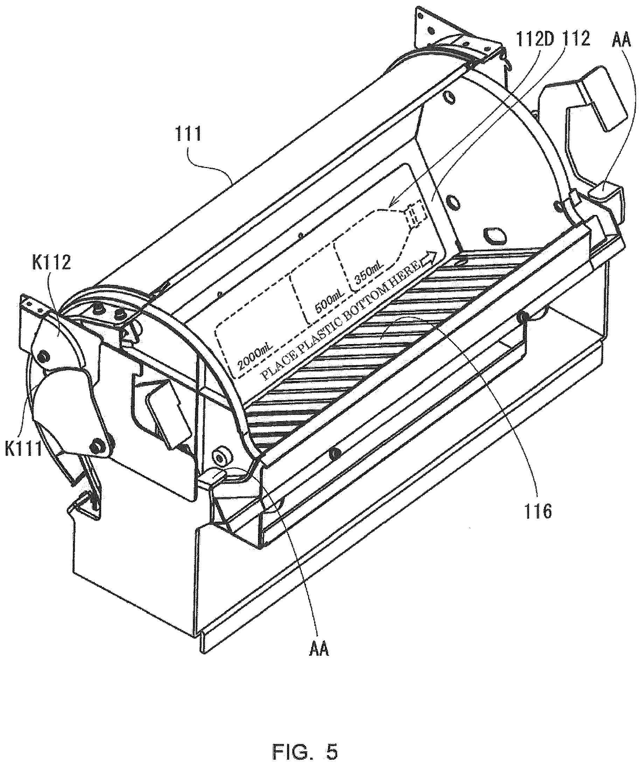

   Fig. 5 is a perspective view illustrating an example of the article collection device (container collection device) in which the outer door is in the opened condition and the inner door is in the closed condition.
[Fig. 6]

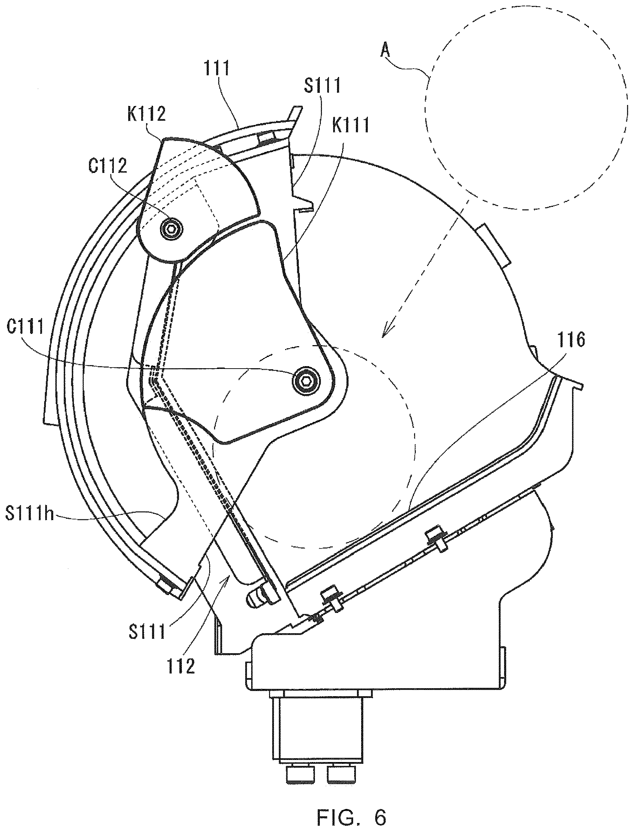

   Fig. 6 is a conceptual side view illustrating an example of the article collection device (container collection device) in which the outer door is in the opened condition and the inner door is in the closed condition.
[Fig. 7]

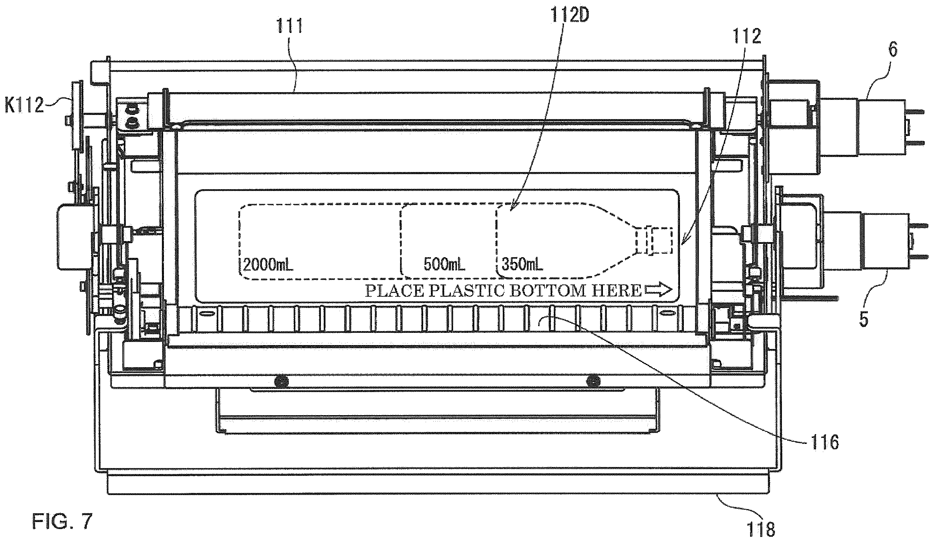

   Fig. 7 is a perspective view illustrating an example of the article collection device (container collection device) in which the outer door is in the opened condition and the inner door is in the closed condition from a front upper position.
[Fig. 8]

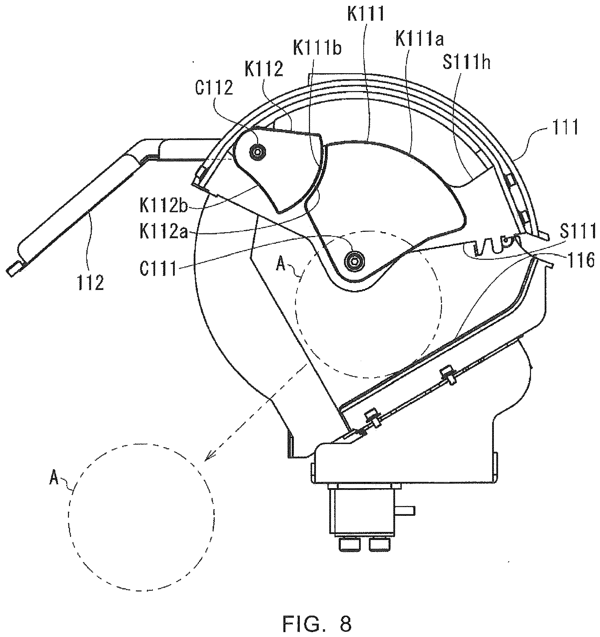

   Fig. 8 is a conceptual side view illustrating an example of the article collection device (container collection device) in which the outer door is in the closed condition and the inner door is in the opened condition.
[Fig. 9]

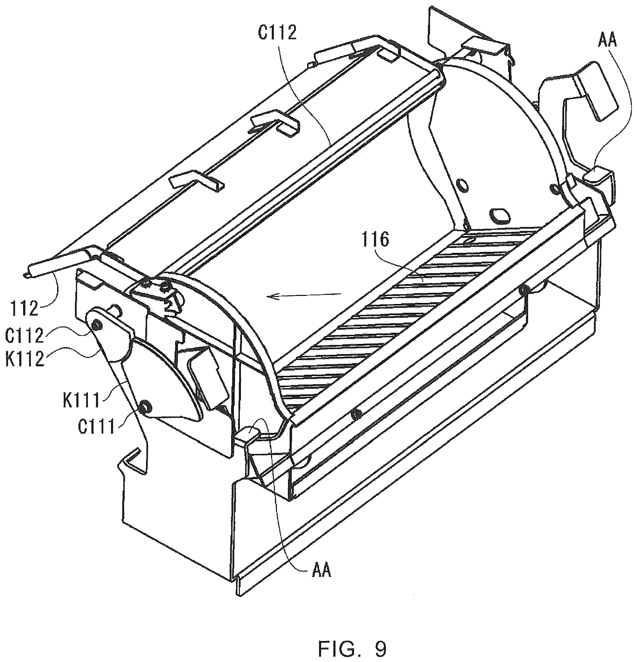

   Fig. 9 is a perspective view illustrating an example of the article collection device (container collection device) in which the outer door (not shown) is in the closed condition and the inner door is in the opened condition.
[Fig. 10]

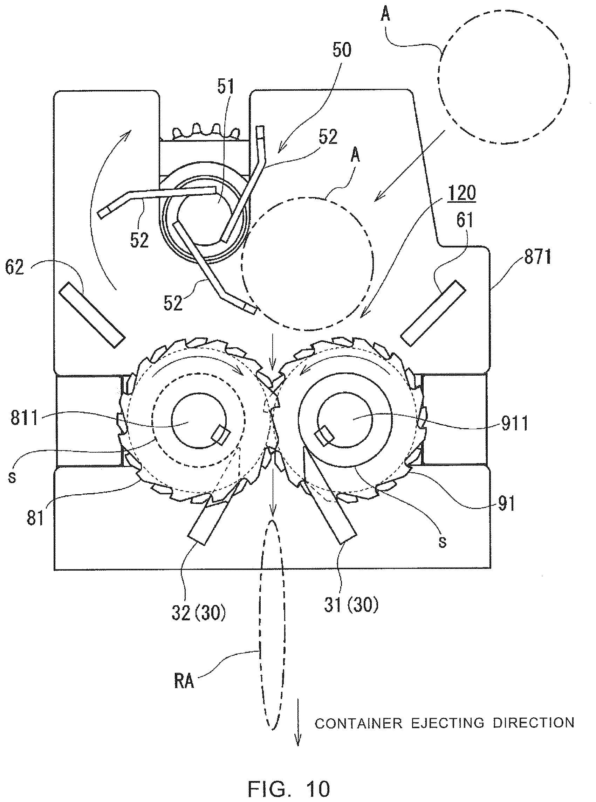

   Fig. 10 is a conceptual side view illustrating an example of a volume reduction part in the article collection device (container collection device) according to the embodiment of the present invention.
[Fig. 11]

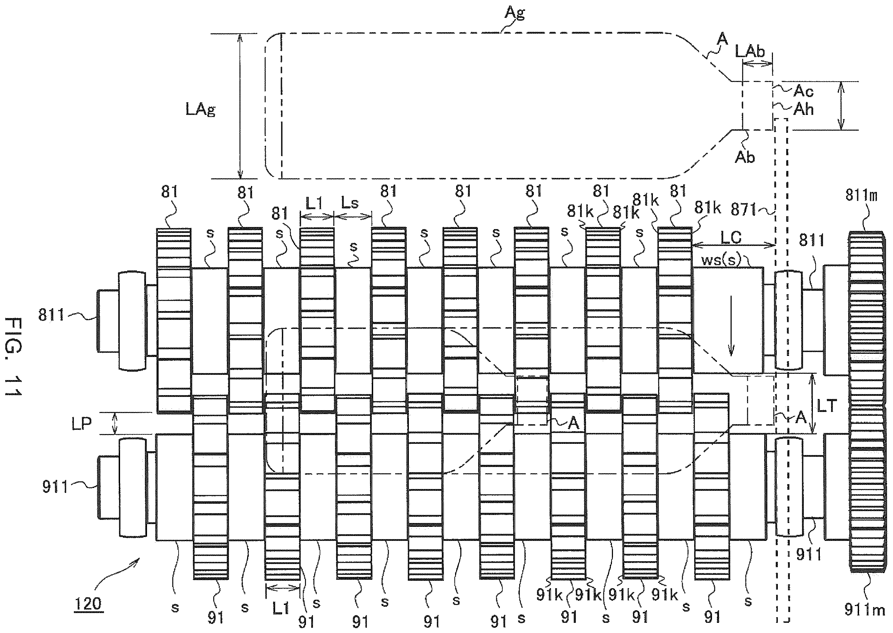

   Fig. 11 is a conceptual plan view illustrating an example of the volume reduction part in the article collection device (container collection device) according to the embodiment of the present invention.
[Fig. 12]

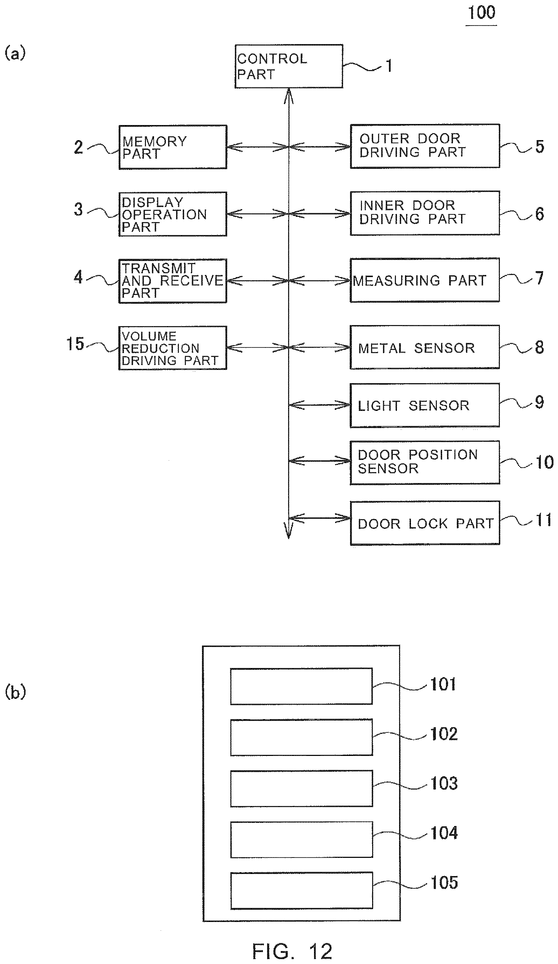

   Fig. 12 is a view for describing the article collection device (container collection device) according to the embodiment of the present invention, in which Fig. 12 at (a) is an electrical function block diagram of the article collection device (container collection device), and Fig. 12 at (b) is a function block diagram of a control part illustrated in Fig. 12 at (a).
[Fig. 13]

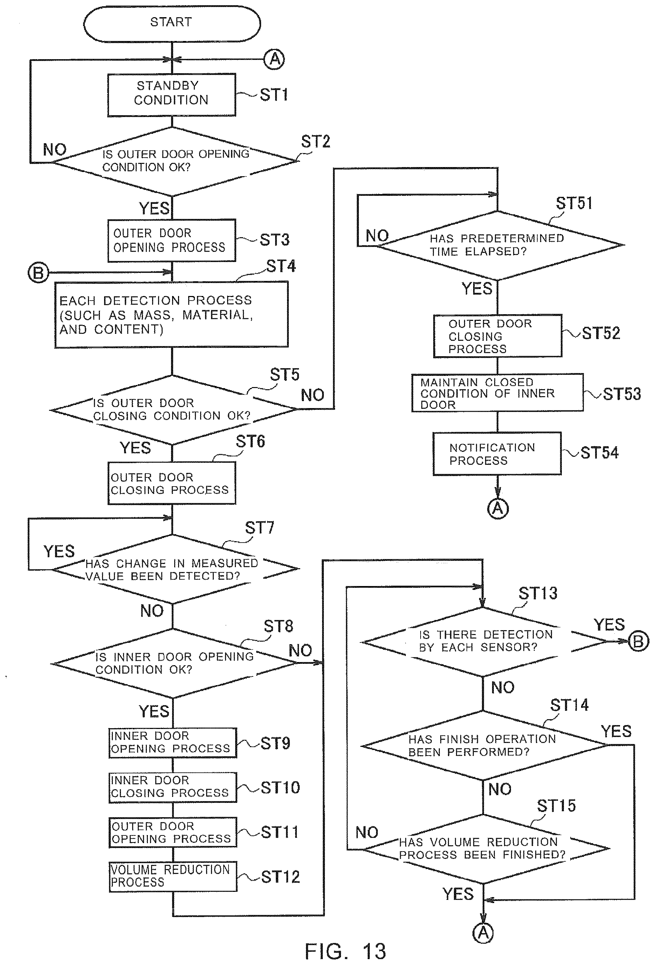

   Fig. 13 is a flowchart illustrating an example of operation of the article collection device (container collection device) according to the embodiment of the present invention.
[Fig. 14]

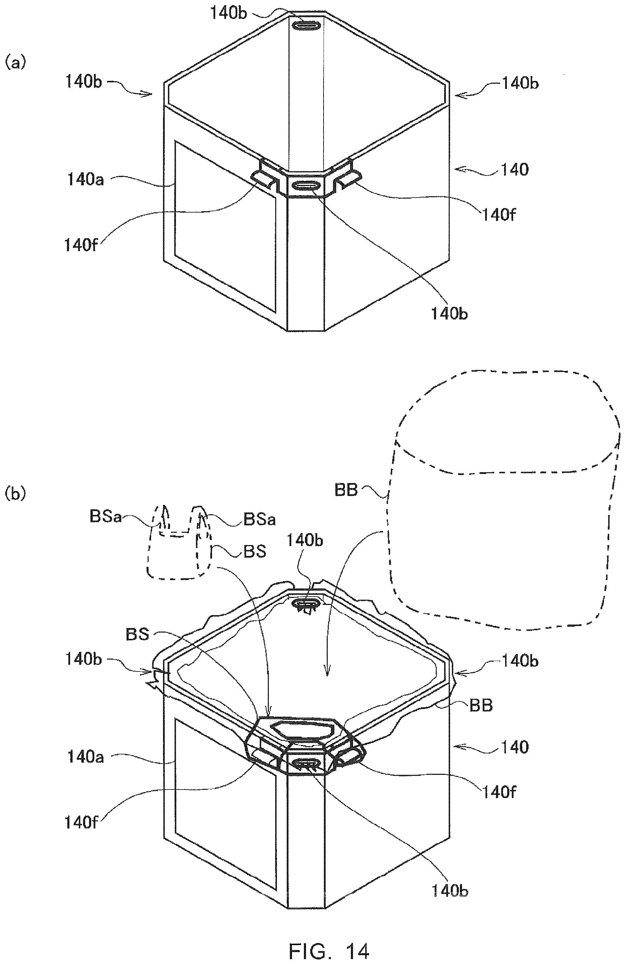

   Fig. 14 is a view illustrating an example of a container storage part in the article collection device (container collection device) according to the embodiment of the present invention, in which Fig. 14 at (a) is a perspective view illustrating an example of the container storage part, and Fig. 14 at (b) is a view illustrating an example of the container storage part with a container storage bag and a cap storage bag mounted thereon.
[Fig. 15]

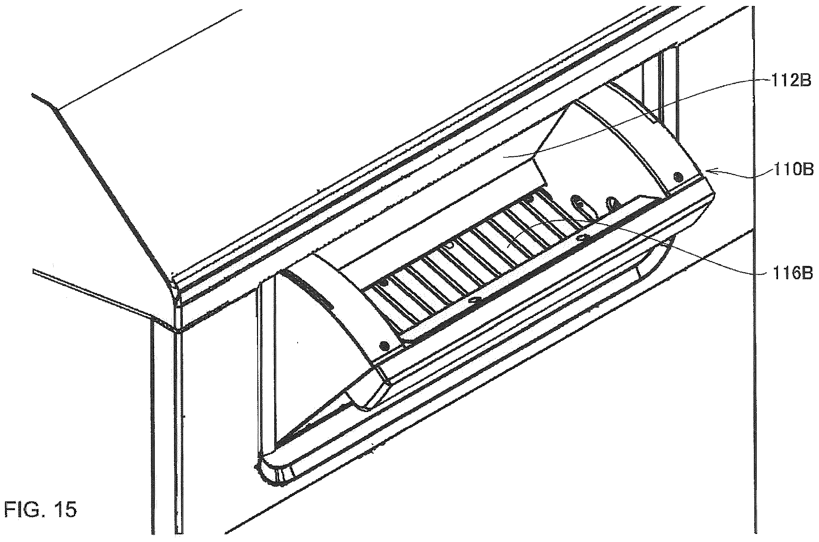

   Fig. 15 is a perspective view illustrating an example of a container charging part in the article collection device (container collection device) according to the embodiment of the present invention.

### [Description of Embodiment]

An embodiment of the present invention is described below with reference to the drawings. The embodiment of the present invention includes the illustrated contents, but is not limited to only the ones. In the following descriptions with reference to the drawings, portions common to sites already described are denoted by the same reference symbols, and overlapping descriptions are partially omitted.

For example, a container collection device is described as an article collection device according to the embodiment of the present invention.

An article collection device according to the embodiment of the present invention includes: a device main body including a storage part for storing an article therein; a placing part capable of placing the article thereon; an outer door provided on an outer side of the placing part; an inner door provided in a passage passing from the placing part to the storage part in the device main body; an inner door driving part for driving the inner door to be opened and closed; detection means provided to the placing part, for detecting the article placed on the placing part; and a control part. The control part includes a determination part for determining whether the article is a collection object on the basis of a detection result of the detection means.

An empty container collection device as an article collection device according to the embodiment of the present invention includes: an article charging part including a placing part for placing an article thereon; an outer door provided to an opening part of the article charging part so as to be freely opened and closed; an outer door driving part for driving the outer door such that the outer door is in an opened condition or a closed condition; an inner door provided in a passage between the article charging part and a storage part for storing the article therein so as to be freely opened and closed; an inner door driving part for driving the inner door such that the inner door is in the opened condition or the closed condition; a detection part for detecting whether an article placed on the placing part in the article charging part is a collection object or a non-collection object; and a control part for performing control to cause the outer door to be in the opened condition when the article is collected, performing, when the detection part detects that an article to be collected has been placed on the placing part, control to cause the outer door to be in the closed condition and the inner door to be in the opened condition so that the storage part collects an article as a collection object, and performing, when the detection part detects that a non-collection object has been placed on the placing part and when the non-collection object is not rejected for a predetermined time or longer, control to cause the inner door to remain in the closed condition and the outer door to be in the closed condition.

The article is not limited to a PET bottle, a can, and a bottle, and only needs to be, for example, an article to be collected, such as a milk carton, a tray, an ink cartridge, an article to be returned to a library or a rental shop (such as a book and a DVD), a cleaning article, a battery, and a light bulb. In other words, a container collection device is an embodiment of the article collection device.

The article collection device has control means for limiting both the outer door and the inner door from becoming the opened condition. As the control means, for example, the outer door includes a first limitation part for limiting the movement of the inner door, and the inner door includes a second limitation part for limiting the movement of the outer door. Both the outer door and the inner door are limited from becoming the opened condition by the first limitation part and the second limitation part.

The article collection device includes: a device main body including a storage part for storing an article therein; a placing part capable of placing an article thereon; an outer door provided on an outer side of the placing part; an inner door provided in a passage passing from the placing part to a container storage part in the device main body; an inner door driving part for driving the inner door to be closed and opened; a determination part for determining whether an article placed on the placing part is a collection object; and an inner door driving control part (a driving control part in a control part) for controlling driving of the inner door driving part such that a closed condition of the inner door is maintained when the determination part determines that the article is not a collection object, and controlling the driving of the inner door driving part such that the inner door is in an opened condition when the determination part determines that the article is a collection object.

Specifically, in the article collection device according to the embodiment of the present invention, during stand by, the outer door in the article charging part is in the closed condition, and the inner door provided between the article charging part and the storage part so as to be freely opened and closed is in the closed condition. When the article is collected, the condition of the outer door in the article charging part becomes the opened condition, and the determination part determines whether an article placed on the placing part in the article charging part is a collection to be collected (for example, an empty container made of resin, such as a PET bottle). When the determination part determines that the object is an article to be collected (empty container), the condition of the outer door becomes the closed condition and the condition of the inner door provided between the article charging part and the storage part becomes the opened condition, and the container is collected by the storage part. In this embodiment, the container collection device includes a volume reduction mechanism, and by reducing the volume of the container by the volume reduction mechanism, a large amount of empty containers with the reduced volumes can be collected by a collection part having a prescribed volume.

When a non-collection object such as a foreign object is charged in the container charging part, the article collection device performs control such that the inner door is in the closed condition and the non-collection object is not collected in the container storage part in the device main body. When the non-collection object has not been removed from the placing part in the container charging part for a predetermined time, the article collection device controls the driving such that the inner door remains in the closed condition and the outer door is in the closed condition. In other words, another non-collection object can be prevented from being charged in the container storage part.

Specifically, as illustrated in Fig. 1 at (a) and (b), in an empty container collection device 100 as an article collection device according to the embodiment of the present invention, a container charging part 110 is provided above a device main body 100B, and an outer door 111 is provided on the outer side of an opening part of the container charging part 110. In the device main body 100B, a display operation part 3 and a transmit and receive part 4 (communication part) are provided on the front side in the vicinity above the outer door 111. A baggage hook 100f is provided on the front side of the device main body 100B.

A passage passing to the container storage part 140 is provided below the container charging part 110, and an inner door 112 is provided in a passage 71 from a placing part 116 of the container charging part 110 to the container storage part 140.

In this embodiment, in the empty container collection device 100, a volume reduction part 120 (volume reduction mechanism) is provided between the inner door 112 and the container storage part 140. When the inner door 112 is in the opened condition, the volume reduction part 120 crushes an empty container A from the container charging part 110 to reduce the volume of the empty container A, and outputs the container RA with the reduced volume to the downward container storage part 140.

The device main body 100B in the empty container collection device 100 has a drawer 100C on which the container storage part 140 is placed. A drawer handle 100e and a key hole 100r are provided on the front side, and a key can be inserted to the key hole 100r to be locked or released.

A translucent part 100A (translucent window) is provided on the front side of the device main body 100B, specifically, on the front side of the drawer 100C. An empty container stored in the container storage part 140 can be visually recognized from the outside.

A carrying handle 100g to be used for conveyance is provided on a side part of the device main body 100B.

The device main body 100B has a cap charging part 108 on the front side, and a cap passage 72 from the cap charging part 108 to the lower side in the device main body is provided. A cap charged in the cap charging part 108 can be stored in a cap storage part 145 through the cap passage 72.

The cap passage 72 may have a mechanism for sorting a cap and an article smaller than the cap. Specifically, the cap passage 72 may be branched and a mesh member may be provided at the branched part such that leftover drink, cigarette butts, and rainwater are ejected through another path and accumulated, and only a cap is stored in the cap storage part 145.

Next, the container charging part 110 in the empty container collection device 100 as an article collection device is described. Fig. 2 is a conceptual diagram of the container charging part in the empty container collection device. Fig. 3 and Fig. 4 are diagrams illustrating an example of the empty container collection device with the outer door 111 in the closed condition and the inner door 112 in the closed condition. Fig. 5, Fig. 6, and Fig. 7 are diagrams illustrating an example of the empty container collection device 100 with the outer door 111 in the opened condition and the inner door 112 in the closed condition. Fig. 8 and Fig. 9 are conceptual diagrams illustrating an example of the empty container collection device with the outer door 111 in the closed condition and the inner door 112 in the opened condition. In Fig. 9, the outer door is not illustrated.

The container charging part 110 in the empty container collection device 100 according to the embodiment of the present invention has a placing part 116, an outer door 111, an inner door 112, a base 118, a measuring part 7, a supporting part for outer door S111, a supporting part for inner door S112, an outer door driving part 5, an inner door driving part 6, a first limitation part K111, and a second limitation part K112.

The placing part 116 is configured to be capable of placing a collection object thereon. The placing part 116 is provided with light sensors 9 such as a receiver 9a and an emitter 9b and metal sensors. The measuring part 7 is provided under the placing part 116.

In this embodiment, the placing part 116 is provided such that a placing plane thereof is not horizontal but is slanted such that a container storage part 140 side of an article becomes lower than a charging port side (opening side when outer door 111 is in opened condition). Specifically, the placing part 116 is configured such that the charged article falls toward the container storage part 140 (or volume reduction part 120) due to its own weight. In this manner, a compact article collection device can be provided without the need of providing a convey mechanism for transferring an article (charged article) to the container storage part 140.

The placing part 116 has a structure in which the surface of a placing plane is subjected to surface treatment, and unevenness parts are formed to prevent a charged article from sticking to the placing part. When the article collection device is a container collection device, even when a container is wet, the contact area between the container surface and the surface of the unevenness shape of the placing part is relatively small, and hence surface tension due to the wet is small, and the container easily moves toward the container storage part 140. In other words, a trouble that the wet container does not drop on the container storage part side can be prevented.

The outer door 111 is provided on the outer side of the placing part 116. The outer door driving part 5 drives the outer door 111 so as to be freely opened and closed.

The inner door 112 is provided in the passage 71 between the placing part 116 and the volume reduction part 120. The inner door driving part 6 drives the inner door 112 so as to be freely opened and closed. As illustrated in Fig. 5 and Fig. 7, the inner door 112 is provided with a guide part 112D for guiding a place condition of the empty container. The guide part 112D is provided at a position at which the guide part 112D is exposed and can be visually recognized from the device main body. The guide part 112D is guidance indication as information such that an article (an empty container such as a PET bottle) is placed in a prescribed direction at a prescribed position (for example, 350 ml, 500 ml, or 2000 ml). The guide part 112D may be a concave part, a convex part, a sticker, an LED display part, or an LCD provided on the surface of the inner door 112.

The article collection device may include judging means for judging, by a detection sensor such as an imaging part, whether an article is properly placed at a placing position indicated by the guide part 112D. When the placing direction and positions are not correct as a result of an imaging process or a detection part such as an optical sensor, this fact may be notified.

In this embodiment, the empty container collection device 100 has a base 118, and the base 118 has supporting parts for outer door S118 and S111 for supporting the outer door 111 and the outer door driving part 5. Specifically, at an upper end part of the two supporting parts for outer door S118, an outer door driving part 5 and a rotation shaft C111 are provided, the sector-shaped supporting part for outer door S111 is provided to the rotation shaft C111 so as to be freely rotate, and the outer door 111 is supported by the sector-shaped supporting part for outer door S111. The rotation shaft C111, which is one of the two rotation shafts C111, is connected to a rotation shaft of a motor of the outer door driving part 5.

A hole part S111h through which a rotation shaft C112 of the inner door 112 passes is provided in the sector-shaped supporting part for outer door S111.

The measuring part 7 is disposed between the base 118 and the placing part 116, and supports the placing part 116.

The inner door 112 is configured to guide an empty container placed on the placing part 116 to the volume reduction part 120 while the inner door 112 is in the opened condition. In this embodiment, the inner door driving part 6 and the inner door 112 are supported by a supporting part for inner door S112 disposed on the measuring part 7 and extending between the measuring part 7 and the placing part 116. The inner door driving part 6 is provided with the rotation shaft C112 of the inner door 112, and the inner door 112 is provided to the rotation shaft C112. When the inner door 112 is set to the opened condition, a collection object can be guided to the container storage part 140 in the device main body. The supporting part for inner door S112 has a hole part S112h through which the rotation shaft C111 passes.

In other words, the outer door driving part 5 and the outer door 111 are supported by the supporting part for outer door S111 of the base 118, and the placing part 116 is provided at the upper part of the measuring part 7 disposed on the base 118, and hence the mass of a collection object placed on the placing part 116 can be accurately measured by the measuring part 7. Specifically, the outer door 111 and the outer door driving part 5 are not supported on the measuring part 7, and hence the measuring part 7 is less affected by vibration of the outer door 111 and the outer door driving part 5, and the mass of a collection object on the placing part 116 can be accurately measured.

The outer door 111 in the empty container collection device 100 as an article collection device according to the embodiment of the present invention is configured to be movable between an opened position at which the placing part 116 is exposed and a closed position at which the placing part 116 is covered, and when the outer door 111 is closed, the outer door 111 is movable from the opened position to the closed position toward the placing part 116. In other words, the outer door 111 is configured to move from the opened condition toward the placing part 116 and be closed, and hence, for example, when the hand or arm of a user is sandwiched between the outer door 111 and the placing part 116, the value measured by the measuring part fluctuates, and by detecting the fluctuation by the control part, the fact that the hand or arm of a user or a foreign object is sandwiched between the outer door 111 and the placing part 116 can be easily detected.

In the empty container collection device 100 as an article collection device according to the embodiment of the present invention, the outer door 111 has a first limitation part K111 for limiting the movement of the inner door 112. The inner door 112 has a second limitation part K112 for limiting the movement of the outer door 111. The empty container collection device 100 has a mechanism in which the state where both the outer door 111 and the inner door 112 are in the opened condition is limited by the first limitation part K111 and the second limitation part K112.

Specifically, the empty container collection device 100 has the first limitation part K111 provided to the outer door 111 and the second limitation part K112 provided to the inner door 112, and hence the opening and closing operation of each door can be limited by a simple mechanical structure depending on the opened or closed condition of each of the outer door 111 and the inner door 112.

The first limitation part K111 in the empty container collection device 100 as an article collection device is configured to move in response to the movement of the outer door 111. The second limitation part K112 is configured to move in response to the movement of the inner door 112. In the empty container collection device 100, the first limitation part K111 is configured to limit the movement of the inner door 112 when the outer door 111 is in the opened condition, and the second limitation part K112 is configured to limit the movement of the outer door 111 when the inner door 112 is in the opened condition.

Specifically, in this embodiment, in the empty container collection device 100, when the outer door 111 is in the opened condition, the outer door 111 is limited from becoming the opened condition while the inner door 112 is in the closed condition. In other words, when a charged article is placed on the placing part 116 with the outer door 111 opened, the inner door 112 is in the closed condition and is not in the opened condition, and hence, irrespective of whether the article placed on the placing part 116 is a collection object or a non-collection object, the object is not stored in the container storage part 140 in the device main body 100B. In other words, this condition is a condition in which an article (collection object or non-collection object) abuts on the inner door 112, and the inner door 112 serves as a part of the placing part.

The first limitation part K111 and the second limitation part K112 are configured such that movement paths thereof overlap each other. In this embodiment, the empty container collection device 100 has a structure in which when one of the first limitation part K111 and the second limitation part K112 limits the movement of the other limitation part, the first limitation part K111 and the second limitation part K112 are adjacent to each other with a slight gap to have an arc shape. Specifically, in this embodiment, the first limitation part K111 is formed into a substantially sector shape. The first limitation part K111 has a convex arc shape part K111a and a concave shape part K111b. The second limitation part K112 is formed into a substantially sector shape. Specifically, the second limitation part K112 has a convex arc shape part K112a and a concave shape part K112b.

As illustrated in Fig. 5 and Fig. 6, when the outer door 111 is in the opened condition and the inner door 112 is in the closed condition and when the first limitation part K111 limits the movement of the second limitation part K112, the convex arc shape part K111a of the first limitation part K111 and the concave shape part K112b of the second limitation part K112 are adjacent to each other with a slight gap to have an arc shape.

In other words, in the embodiment of the present invention, as described above, when the outer door 111 is in the opened condition, the inner door 112 is in the closed condition, and the movement of the second limitation part K112 is limited by the first limitation part K111, and hence the inner door 112 remains in the closed condition and the condition does not become the opened condition.

As illustrated in Fig. 8 and Fig. 9, when the inner door 112 is in the opened condition and the outer door 111 is in the closed condition and when the second limitation part K112 limits the movement of the first limitation part K111, the convex arc shape part K112a of the second limitation part K112 and the concave shape part K111b of the first limitation part K111 are adjacent to each other with a slight gap to have an arc shape.

In other words, the empty container collection device as an article collection device in the embodiment of the present invention has a structure in which when the outer door 111 is in the closed condition and the inner door 112 is in the opened condition, the movement of the first limitation part K111 is limited by the second limitation part K112, and hence the outer door 111 remains in the closed condition and the condition does not become the opened condition.

In this embodiment, the empty container collection device 100 may have prohibiting means for prohibiting the movement of one or both of the first limitation part K111 and the second limitation part K112. Specifically, for example, the prohibiting means has a solenoid. For example, the solenoid has a structure in which a movable pin (plunger) made of metal is disposed in a coil, and when the coil is not energized, the movable pin (plunger) is disposed at a position protruding from a coil end part by a biasing part. When the coil is energized, the movable pin moves into the coil.

For example, as the prohibiting means capable of prohibiting the movement of the outer door 111 from the closed condition to the opened condition, a movable pin (plunger) of an outer door solenoid may be configured to be engaged with a hole part provided in the first limitation part K111. Control is performed by the control part such that, when the closed condition of the first limitation part K111 is maintained and the movement to the opened condition is prohibited, the movable pin is engaged with the hole part, and when the movement is not prohibited, the movable pin is in a non-engaged condition. In other words, the prohibiting means can prohibit the movement of the first limitation part K111 from the closed condition to the opened condition with a simple structure.

As the prohibiting means capable of prohibiting the movement of the inner door 112 from the closed condition to the opened condition, a movable pin (plunger) of an inner door solenoid may be engaged with a hole part provided in the second limitation part K112. Control is performed by the control part such that, when the closed condition of the second limitation part K112 is maintained and the movement to the opened condition is prohibited, the movable pin is engaged with the hole part, and when the movement is not prohibited, the movable pin is in a non-engaged state. In other words, the prohibiting means can prohibit the movement of the second limitation part K112 from the closed condition to the opened condition with a simple structure.

The empty container collection device 100 as an article collection device according to the embodiment of the present invention has a standby part AA for causing the outer door 111 to stand by at a closed position as illustrated in Fig. 5 and Fig. 9. The standby part AA is provided at a position at which the outer door 111 does not contact the placing part 116, and functions as a stopper for the outer door 111.

Fig. 10 is a side conceptual diagram illustrating an example of the volume reduction part in the empty container collection device as an article collection device according to the embodiment of the present invention. Fig. 11 is a plan conceptual diagram illustrating an example of the volume reduction part in the empty container collection device.

The volume reduction part 120 has a structure in which a pair of rotation shafts 811 and 911 are pivotally supported by two substantially plate-shaped support members so as to be freely rotatable.

A feed mechanism 50 is provided at an upper part of the volume reduction part 120, and a rotation shaft 51 in the feed mechanism 50 is pivotally supported by the above-mentioned substantially-plate-shaped support members so as to be freely rotatable. In the feed mechanism 50, the rotation shaft 51 has a plurality of blade parts 52 (made of metal or resin) as paddles. In the feed mechanism 50, when the rotation shaft 51 rotates, the blade parts 52 rotate about the rotation shaft 51 to guide an empty container A to the volume reduction part 120.

Plate-shaped restriction members 61 and 62 are provided at an upper part of the volume reduction part 120 so as to be slanted in opposite directions such that the empty container A is guided to the center of the volume reduction part 120, and restrict the movement of the empty container A to other locations.

The rotation shafts 811, 911, and 51 are disposed in parallel to one another with predetermined gaps. In each of the pair of rotation shafts 811 and 911, compressing rollers 81 and 91 having blade faces 81k and blade faces 91k on both axial side surfaces and spacers s whose diameter is smaller than those of the compressing rollers 81 and 91 and whose thickness is slightly larger than those of the compressing rollers 81 and 91 are alternatingly provided side by side.

The outer peripheral part of a compressing roller provided to one rotation shaft is disposed between compressing rollers provided to the other rotation shaft, and is disposed at a position away from a spacer s provided between the compressing rollers provided to the other rotation shaft by a predetermined distance LP. A distance LP between a spacer s provided to the rotation shaft 811 and a compressing roller 91 provided to the rotation shaft 911 and opposed to the spacer s is set to be smaller than a maximum outer diameter LAg of a body part Ag of the empty container A.

As illustrated in Fig. 10 and Fig. 11, a gear 811m is provided at one end part of the rotation shaft 811, and is configured to be engaged with a gear 911m provided at one end part of the rotation shaft 911. The rotation shafts 811, 911, and 51 are rotationally driven by driving motors (not shown). When driven, the rotation shaft 811 and the rotation shaft 911 rotate in opposite directions, and an empty container A charged in the center part is compressed by the compressing rollers 81 and 91, and the empty container having the reduced volume is output downward.

Removing parts 31 and 32 are configured to remove the container having the volume reduced by the compressing rollers 81 and 91 in the volume reduction part 120 from the compressing rollers 81 and 91.

As illustrated in Fig. 11, a length LAb (neck length) of a neck part Ab of an empty container A such as a PET bottle is the length from a distal end part Ac on the opening part Ah side to a neck ring or a root part of the neck part.

The empty container A made of resin, such as a PET bottle, is formed such that the thickness of a part other than the neck part Ab, specifically, the thickness of a shoulder part or a body part Ag is larger than the thickness of the neck part Ab. As a recycling empty container, for example, when the neck part Ab and another part of the empty container A are separated to be a body smaller than a reference, this empty container may be regarded as being not subjected to recycling by a recycling operator. The volume reduction part 120 reduces the volume of an empty container to have a flat shape in a condition larger than the reference such that the empty container is subjected to recycling in a state where the neck part Ab having a relatively large thickness and a large mass is not separated from the shoulder part or the body part Ag.

A distance LT between a spacer s provided to the rotation shaft 911 and a spacer ws (s) provided to the rotation shaft 811 is larger than the outer diameter of the neck part Ab of the empty container.

A distance LC between the inner surface of the support member 871 and the compressing roller 81 disposed on the side surface side of the rotation shaft 811 is larger than the length LAb of the neck part Ab of the empty container A.

In this embodiment, the distance LC is set to be larger than the axial length of the spacer ws (s) disposed on the side surface side of the rotation shaft 811. The axial length (thickness) of the spacer ws (s) is set to be about twice the axial length Ls of the other spacers.

In other words, the compressing roller on the side of the support member 871 provided to the rotation shaft 811 is disposed at a position away from the side surface of the support member 871 by a predetermined distance such that the neck part Ab of the empty container A is not separated from the shoulder part or the body part Ag. In other words, when the volume of the container is to be reduced, the volume reduction part 120 reduces the volume of the container in a condition in which the neck part Ab of the empty container A is connected to the shoulder part or the body part Ag.

In this embodiment, the thickness L1 of the compressing rollers 81 and 91 in the axial direction is smaller than the length LAb of the neck part Ab of the empty container A. For example, even when an empty container A made of resin, such as a PET bottle, is disposed upside down, specifically, even when a distal end part Ac formed at the opening part Ah of the empty container A is disposed at a position on the substantially-plate-shaped support member 871 side, the neck part Ab of the empty container A is not separated from the shoulder part or the body part Ag when the volume of the container is reduced.

Next, an example of the electrical configuration of the empty container collection device 100 as an article collection device according to the embodiment of the present invention is described.

As illustrated in Fig. 12, the article collection device (empty container collection device 100) includes a control part 1 (CPU), a memory part 2, a display operation part 3, a transmit and receive part 4, an outer door driving part 5, an inner door driving part 6, a measuring part 7, a metal sensor 8, a light sensor 9, a door position sensor 10, a door lock part 11, a volume reduction driving part 15. The components are electrically connected by signal lines.

The control part 1 (CPU) comprehensively controls the components in the article collection device (empty container collection device 100). For example, the control part 1 executes a control program to implement the functions related to the invention of the present application to a computer.

The memory part 2 is a memory device such as a RAM and a ROM. The memory part 2 memorizes a control program. The memory part 2 memorizes features of an empty container as a collection object. Examples of the features of the empty container include the range of the container mass and a determination as to whether the empty container is made of resin material.

The display operation part 3 performs predetermined display under control of the control part 1. The display operation part 3 outputs a signal corresponding to user's operation to the control part 1. The display operation part 3 is, for example, a touch panel display device.

The transmit and receive part 4 is a transmit and receive device for communicating with a non-contact IC card or an IC tag, and performs predetermined communication under control of the control part 1. The transmit and receive part 4 performs predetermined communication with another terminal device (computer) through a wireless communication path or a wired communication path under control of the control part 1.

The outer door driving part 5 is a motor for opening and closing the outer door 111, and the driving thereof is controlled by control from the control part 1.

The inner door driving part 6 is a motor for opening and closing the inner door 112, and the driving thereof is controlled under control of the control part 1 such that the inner door is in the opened condition or the closed condition.

The measuring part 7 measures the mass of an empty container or a non-collection object placed on the placing part 116 in the container charging part 110. The measuring part 7 is a measuring device, such as a load cell.

By detecting leftover drink in a container placed on the placing part 116 in the container charging part 110, the measuring part 7 is used as a sensor for judging whether a container can be collected. By integrating the weight values of containers judged to be collectable, the measuring part 7 can specify the total weight stored in the container storage part 140. This function can eliminate the need of providing the measuring part to the container storage part 140, and can secure the container storage part 140 having a large capacity and downsize the measuring part 7 itself. An object to be measured is relatively small, and hence a large measuring part 7 is not required to be provided.

The metal sensor 8 detects whether an article placed on the placing part 116 in the container charging part 110 is metal or non-metal. In this embodiment, when the metal sensor 8 detects that an article placed on the placing part 116 is metal, the control part 1 determines that the article placed on the placing part 116 is a non-collection object.

The light sensor 9 has a receiver 9a for receiving light from an emitter 9b provided in the container charging part 110. For example, the light sensor 9 has a polarizing plate and is configured to receive light through the polarizing plate. The light sensor 9 can detect an empty container to be collected by detecting polarized light transmitted through a translucent empty container such as a PET bottle.

The control part 1 controls the light sensor 9 to detect the received light transmitted through the translucent empty container placed on the placing part in the container charging part, and determines whether the empty container is an empty container to be collected on the basis of a detection signal from the light sensor 9.

In the article collection device, the above-mentioned various sensors for judging whether a container can be collected are provided near the placing part. For example, the conventional collection device takes an article into the device, and judges whether the article can be collected, and ejects a non-collection object from an ejecting port different from a charging port. A judging part is provided in the device, and hence the ejecting port is required to be provided.

On the other hand, in the article collection device according to the embodiment of the present invention, various sensors for judging whether an article can be collected are provided on the placing part serving as the charging port of the device, and hence a collection object is not required to be taken into the device. Thus, the ejecting port is not required to be provided, and a compact article collection device can be provided.

The door position sensor 10 detects the position of the outer door 111 and the position of the inner door 112, and outputs signals related to the position of the outer door 111 and the position of the inner door 112 to the control part 1. The control part 1 controls the opened and closed conditions of the outer door 111 and the inner door 112 on the basis of the signals.

For example, the door lock part 11 has a lock device such as a solenoid, and locks the movement of the outer door 111 and the inner door 112 as needed under control of the control part 1.

The control part 1 has a first driving control part 101, a second driving control part 102, a third driving control part 103, a fourth driving control part 104, an notification process part 105, and the above-mentioned determination part. For example, the control part 1 executes a control program to implement the functions of the driving control parts on the article collection device (empty container collection device) as a computer.

During collection of a container, the first driving control part 101 performs control to cause the outer door 111 to be in the opened condition by the outer door driving part 5. The control to cause the outer door 111 to be in the opened condition includes not only control to automatically open the outer door 111 but also, for example, an action to open (manually) the door itself by the hand of a user (in accordance with notification and display "open") though the lock is simply released.

When a collection object is placed on the placing part 116, the second driving control part 102 performs control for collecting a container in the container storage part 140 by controlling the outer door 111 to be in the closed condition and the inner door 112 to be in the opened condition by the outer door driving part 5 and the inner door driving part 6.

When the article is a non-collection object as a result of the detection by the detection part, the third driving control part 103 performs control such that, when the non-collection object has not been rejected for a predetermined time or more, the outer door driving part 5 and the inner door driving part 6 maintain the closed condition of the inner door 112 and cause the outer door 111 to be in the closed condition.

To move the outer door 111 from the opened position to the closed position by the outer door driving part 5, the fourth driving control part 104 performs control such that, when the measuring part 7 detects a change in measured value, the movement of the outer door 111 from the opened position to the closed position is stopped. In other words, in the case of moving the outer door 111 from the opened position to the closed position, the control part 1 performs control such that, when a change in value measured by the measuring part 7 is detected, the movement of the outer door 111 from the opened position to the closed position is stopped. Thus, the hand or arm of a user or a foreign object can be prevented from being sandwiched between the outer door 111 and the placing part 116, and the load on the outer door driving part 5 can be reduced and a failure can be prevented.

When a non-collection object is detected by the detection part, the notification process part 105 performs an notification process so as to reject the non-collection object. As the notification process, for example, a screen to prompt the user to reject a non-collection object is displayed on the display part of the display operation part 3.

Next, an example of the operation of the article collection device (empty container collection device 100) according to the embodiment of the present invention is described with reference to Fig. 13.

In Step ST1, the empty container collection device 100 is in a standby condition. When the control part 1 receives signals from the transmit and receive part 4 (communication part) and the display operation part 3, the control part 1 performs processing in accordance with the signals. For example, the control part 1 performs a process to display "Touch a card (such as membership card)" on the display part of the display operation part 3. Examples of the card (membership card) include a non-contact IC card for a member.

In Step ST2, the control part 1 determines whether an outer door opening condition is satisfied. When the outer door opening condition is satisfied, the flow proceeds to a process of Step ST3. As the outer door opening condition, for example, when an empty container collection start button is operated by the display operation part 3 such as a touch panel, the flow proceeds to the process of Step ST3. The flow may proceed to the process of Step ST3 under a condition that a membership card owned by a user communicates with the transmit and receive part 4 and personal verification has been properly made (outer door opening condition). Examples of the membership card include a non-contact IC card, a magnetic card, a card printed with a barcode or a two-dimensional code, a display device on which a barcode or a two-dimensional code is displayed, and a smartphone and a mobile phone having a membership function.

In Step ST2, for example, the control part 1 performs a process to display "Charge a container" on the display part of the display operation part 3.

In Step ST3, the control part 1 performs an outer door opening process. Specifically, the control part 1 controls the driving such that the door lock part of the outer door 111 is in a release condition and the outer door 111 is moved to the opened condition by the outer door driving part 5.

In Step ST4, the mass, material, and presence/absence of contents of an article placed on the placing part 116 are detected by various detection processes using the measuring part 7, the metal sensor 8, and the light sensor 9, and a signal indicating the detection results is output to the control part 1.

In Step ST5, the control part 1 determines whether an outer door closing condition is satisfied. Specifically, when it is determined that an article placed on the placing part 116 is a collection object, the flow proceeds to the processing of Step ST6, and in other cases (when the article is a non-collection object such as a foreign object), the flow proceeds to the processing of Step ST51.

As a result of the detection process, for example, even when an article placed on the placing part 116 is judged to be an empty container, the control part 1 may judge that the container contains a foreign object when the presence of a predetermined amount of liquid such as leftover drink in the container is detected.

In Step ST6, the control part 1 performs outer door closing processing. Specifically, the control part 1 controls the driving of the outer door driving part 5 such that the outer door is in the closed condition.

In Step ST7, the control part 1 determines whether a change in the value measured by the measuring part 7 has been detected. When the change in the measured value has been detected, the flow proceeds to the processing of Step ST8. In other cases, the detection processing of Step ST7 is continued until the change in the measured value is settled.

In Step ST8, the control part 1 determines whether an inner door opening condition is satisfied. As a result of the determination, when the inner door opening condition is not satisfied, the flow proceeds to the processing of Step ST13, and when the inner door opening condition is satisfied, the flow proceeds to the processing of Step ST9. Examples of the inner door opening condition include a condition that an article placed on the placing part 116 is a collection object.

In Step ST9, the control part 1 performs inner door opening processing. Specifically, the control part 1 controls the driving of the inner door driving part 6 such that the inner door 112 is in the opened condition.

In Step ST9, for example, the control part 1 performs a process to display "Recycling.... containers" on the display part of the display operation part 3. As described later, in the case of a successive charging process of containers, the control part 1 performs a process to count up the number of containers and display the counted number on the display part. In the case where containers are not successively charged, the control part performs a process to display "1 container" on the display part.

In Step ST10, the control part 1 performs inner door closing processing. Specifically, the control part 1 controls the driving of the inner door driving part 6 such that the inner door 112 is in the closed condition. The inner door 112 is in the closed condition, and the placing part and the volume reduction part are separated (partitioned). The flow proceeds to the processing of Step ST11.

In Step ST11, the control part 1 performs outer door opening processing. Specifically, the control part 1 controls the driving of the outer door driving part 5 such that the outer door 111 is in the opened condition. The outer door 111 is in the opened condition, and the next container can be charged.

In Step ST11, for example, the control part 1 performs a process to display "Charge the next container. If not, touch the screen" on the display part of the display operation part 3. As described later, when the operator (such as user) touches the screen of the display operation part 3, it means that the operator declares the finish.

In Step ST12, the control part 1 performs volume reduction processing. Specifically, the control part 1 performs processing for reducing the volume of the empty container A by the volume reduction part 120. The volume reduction processing in Step ST12 is not necessarily required to be performed. As needed, whether to reduce the volume or not may be selected.

In Step ST13, the control part 1 determines whether a new article has been charged in the placing part on the basis of signals from various sensors, and as a result of the determination, when an article is detected by any one of the sensors (detection parts) of the placing part, the flow proceeds to a process of Step ST4. When no article is detected, the flow proceeds to a process of Step ST14.

As described above, when the flow proceeds to Step ST4, the container successive charging process can be performed. Specifically, a new container can be charged in the placing part while the volume reduction part is performing a volume reduction process of an empty container, and hence the detection process by the sensors (detection parts) of the placing part and the volume reduction process by the volume reduction part can be performed in parallel. In other words, the article collection device can efficiently reduce the volume of an empty container.

Even when the successive charging process is not performed, the inner door 112 is in the closed condition and the placing part and the volume reduction part 120 are separated (partitioned) during the volume reduction process, and hence even when pieces of a container are scattered by the volume reduction process by the volume reduction part, the pieces do not reach the placing part.

In Step ST14, the control part 1 determines whether a finish operation has been detected. When the finish operation has been detected, the flow proceeds to the processing of Step ST1, and in other cases, the flow proceeds to the processing of Step ST15. Specifically, for example, the control part 1 performs a process to display "Charge the next container. If not, touch the screen" on the display part of the display operation part 3. When an operation finish is detected by the touch on the screen, the flow proceeds to the above-mentioned process of Step ST1.

In Step ST15, the control part 1 determines whether the volume reduction processing of the container by the volume reduction part 120 has been finished. When the volume reduction processing is finished, the flow proceeds to the processing of Step ST1, and when the volume reduction processing is not finished, the flow proceeds to the processing of Step ST13. Specifically, in Step ST15, the control part 1 starts counting the time from the outer door opened condition in ST11, and when a predetermined time has elapsed, the control part 1 determines that there is no next container, and automatically proceeds to the processing of Step ST1, which is the above-mentioned standby condition.

In Step ST51, when it is determined in Step ST5 whether the outer door closing condition is satisfied and an article placed on the placing part 116 is determined to be a non-collection object, the control part 1 determines whether a predetermined time, for example, about 30 seconds to 1 minute, has elapsed. As a result of the determination, when the predetermined time has elapsed, the flow proceeds to a process of Step ST52. When the predetermined time has not elapsed, the control part 1 is kept in the standby condition until the predetermined time elapses.

In Step ST52 and Step ST53, the control part 1 performs an outer door closing process to close the outer door 111 while the closed condition of the inner door 112 is maintained. Specifically, the control part 1 controls the driving of the outer door driving part 5 such that the outer door 111 is in the closed condition.

In Step ST54, the control part 1 performs an notification process. Specifically, when the outer door 111 is in the closed condition while a non-collection object is placed on the placing part 116 of the container charging part 110, the control part 1 performs a process to notify that the non-collection object remains in the charging part in the volume reduction part and has not been collected, or a process to notify to prompt the user to remove the non-collection object from the placing part 116. As the notification process, a process to display on the display part of the display operation part 3, a process to generate predetermined notifying sound, and a process to turn on a light emitting element such as an LED are performed. The flow proceeds to the process of Step ST1.

As the notification process of the control part 1, the above-mentioned notification may be performed for an external terminal device (not shown). Examples of the external terminal device include a POS terminal installed in a store, a portable terminal device carried by a shop clerk or a system administrator, and a host server. The control part 1 may control the transmit and receive part 4 to perform the above-mentioned notification (such as popup screen display, lamp turning-on, and sound output) to the external terminal device through a wireless or wired communication path. The control part 1 may output an error so as to be directly notified by each terminal device, or an error may be output to a host server and a POS terminal may perform the above-mentioned notification through the server. The control part 1 may perform the notification similarly for other error notice (full capacity detection, sign to replace consumable parts, and other failure errors).

The case where a person who collects a container is specified and the case where a person who collects a container is not specified after the process of Step ST54 are described in detail.

In the case where a person who collects a container is specified, when a clerk who has received the above-mentioned notification passes or touches an IC card attached with identification notice for an administrator (identification notice for administrator is memorized in memory part of IC card) over the transmit and receive part 4 (or brings the IC card near the transmit and receive part 4), the control part performs control to cause the outer door 111 to be in the opened condition after it is confirmed that an authentication process for an administrator has been properly performed. When the condition of the outer door 111 becomes the opened condition, a non-collection object can be removed by the clerk. In other words, only a limited human is given the right to open the outer door in case of error, and hence the charging of another foreign object and mischief can be prevented.

In the case where a person who collects a container is not specified, even if the outer door 111 is closed and a foreign object cannot be charged in ST52 and ST53, when identification notice is read from an IC card by the transmit and receive part 4, the control part 1 may perform a process to cause the outer door 111 to be in the opened condition irrespective of whether the person who collects a container is an administrator. In this manner, a user who wants to use the article collection device can remove a non-collection object. In other words, a chance loss that the article collection device cannot be used until a clear comes to remove a non-collection object can be prevented.

### <Empty Container Storage Part>

Next, an example of the container storage part 140 in the empty container collection device according to the embodiment of the present invention is described with reference to Fig. 14. Specifically, Fig. 14 at (a) is a perspective view illustrating an example of the container storage part, and Fig. 14 at (b) is a diagram illustrating an example of the container storage part having the container storage bag and the cap storage bag mounted thereon.

As illustrated in Fig. 14 at (a), the container storage part 140 provided at a lower part of the device main body 100B of the empty container collection device 100 so as to be freely detachable is a substantially rectangular parallelepiped container having an opening part on its top and a bottom part on its bottom, and a translucent part 140a or a semi-translucent part is provided on the front side. The inside of the container storage part 140 can be easily visually recognized from the outside.

As illustrated in Fig. 14, the container storage part 140 having the opening part on its top is provided with a large-sized container storage bag so as to be freely detachable. In this embodiment, the container storage part 140 having the substantially rectangular opening part on its top is provided with an insertion port 140b for fixing the container storage bag BB to the vicinity of the upper end of the side surface. In this embodiment, a slit-shaped insertion port 140b is formed at the center part of an elastic member having a long hole shape.

To mount the container storage bag BB to the container storage part 140, the container storage bag BB is stored in the center part of the container storage part 140, and an upper end of the container storage bag BB is folded outward to be inserted to the insertion port 140b. In other words, by inserting the upper end of the container storage bag BB to the slit-shaped insertion port 140b of the elastic member, the bag is locked to the slit, and the container storage bag BB is fixed to the container storage part 140.

For example, after a plurality of containers are collected in the container storage bag BB, when the container storage bag BB is removed from the container storage part 140, the container storage bag BB is pulled from the insertion port 140b with a predetermined level of force or more, the bag is not locked and can be easily removed.

In this embodiment, a cap storage part is provided at a part of the container storage part 140. Specifically, the cap storage bag BS is disposed at one corner of the container storage part 140. For example, it is preferred that the cap storage bag BS have two handle parts.

In the container storage part 140, a locking part such as a hook part is provided near the upper part of the side surface of the corner part. The container storage part 140 locks the handle part of the cap storage bag BS to the locking part and disposing the opening part of the bag near the outlet of the cap passage, thereby being capable of easily storing a cap with a simple structure.

In other words, in the example illustrated in Fig. 14, the cap storage part is supported in the container storage part 140. When a handle part BSa of the cap storage bag BS as a cap storage part 140f is locked to a locking part such as a hook near the upper part of the outer side surface of the container storage part 140, the above-mentioned configuration can be easily implemented. The cap storage part is provided in the container storage part 140, and hence the space can be saved.

Fig. 15 is a perspective view illustrating another example of the container charging part in the empty container collection device according to the embodiment of the present invention. In the example illustrated in Fig. 15, in the empty container collection device, the container charging part 110B has a manual drawer structure, and a placing part 116B for placing an empty container thereon is provided at a drawn part. When an empty container is placed on the placing part 116B, the control part in the empty container collection device determines whether the container is a collection object on the basis of signals from the above-mentioned various kinds of sensors (such as measuring part, light sensor, and metal sensor). When the empty container is a collection object and when the manual container charging part 110B can be in the closed condition and a part drawn by the user is in the closed condition, the condition of the inner door 112B becomes the opened condition, and a collection object is collected in the device main body. On the other hand, when the container is a non-collection object, the manual container charging part 110B is locked by a lock mechanism such as a solenoid, and the condition does not become the closed condition. When the non-collection object is taken out from the placing part by the user, the condition of the lock mechanism becomes the unlocked condition, and the manual container charging part 110B can be in the closed condition.

In the embodiment of the present invention, the outer door turns from the upper side to the lower side to be closed, but the closing direction and the movement method are not limited. For example, the closing direction may be a direction from the bottom to the top, a direction from the right to the left, a direction from the left to the right, and a direction from the front to the rear, and the movement method may be turning, translation, folding, and separatable lid type or double door. The same as the above-mentioned outer door applies to the inner door. The opening and closing of at least the outer door is not limited to the driving control, and for example, may be manual.

As described above, the empty container collection device 100 as an article collection device according to the embodiment of the present invention has the device main body 100B including the storage part (container storage part 140) for storing an article therein, and the container charging part 110. The container charging part 110 includes the placing part 116 capable of placing the article thereon, the outer door 111 provided on the outer side of the placing part 116, and the inner door 112 provided in the passage 71 passing from the placing part 116 to the storage part (container storage part 140) in the device main body 100B. The empty container collection device 100 as an article collection device includes the outer door driving part 5 for driving the outer door 111 to be opened and closed and the inner door driving part 6 for driving the inner door 112 to be opened and closed.

The empty container collection device 100 includes detection means (such as measuring part 7, light sensor 9, and metal sensor 8) provided to the placing part, for detecting an article placed on the placing part. The empty container collection device 100 has a control part 1, and the control part 1 has a determination part for determining whether the article is to be collected on the basis of a detection result of the detection means.

In other words, there can be provided a compact empty container collection device having a simple structure, which is capable of determining whether a charged article is a collection object without taking the article into the device main body 100B of the empty container collection device 100.

The detection means in the empty container collection device 100 as an article collection device according to the embodiment of the present invention includes the mass detection part (measuring part 7) provided to the placing part 116 in the container charging part 110, for detecting the mass of the article placed on the placing part 116. The determination part in the control part 1 determines whether the article is a collection object on the basis of the mass of the article placed on the placing part 116, which is detected by the mass detection part (measuring part 7).

Specifically, for example, when the mass of the article placed on the placing part 116 falls within a prescribed range with respect to the mass of an empty container to be collected, the determination part determines that the article placed on the placing part 116 is a collection object, and performs control to store an empty container to be collected in the device main body while setting the outer door to the closed condition and the inner door to the opened condition, determine that the container is a non-collection object when the mass is out of the range, continue to maintain the closed condition of the inner door and maintain the opened condition of the outer door so as not to collect the non-collection object in the device main body.

In other words, there can be provided a compact empty container collection device having a simple structure, which is capable of, when an article placed on the placing part 116 is a non-collection object on the basis of the mass of an article placed on the placing part 116, storing only a collection object in the container storage part 140 in the device main body 100B without storing the non-collection object in the device main body 100B.

The control part 1(such as the first driving control part 101, the second driving control part 102, and the third driving control part 103) in the empty container collection device 100 as an article collection device according to the embodiment of the present invention includes the driving control part for controlling the driving of the inner door driving part 6 such that the closed condition of the inner door 112 is maintained when the determination part determines that the article is not a collection object, and controlling the driving of the inner door driving part 6 such that the inner door 112 is in the opened condition when the determination part determines that the article is a collection object.

In other words, there can be provided a compact empty container collection device having a simple structure, which is configured such that, when a charged article is a non-collection object, only a collection object can be stored in the container storage part 140 in the device main body 100B without storing the non-collection object in the device main body 100B.

The empty container collection device 100 as an article collection device according to the embodiment of the present invention includes: the article charging part (container charging part 110) including the placing part 116 for placing an article thereon; the outer door 111 provided to the opening part of the article charging part (container charging part 110) so as to be freely opened and closed; the outer door driving part 5 for driving the outer door 111 such that the outer door 111 is in the opened condition or the closed condition; the inner door 112 provided in the passage 71 between the container charging part 110 and the container storage part 140 so as to be freely opened and closed; the inner door driving part 6 for driving the inner door 112 such that the inner door 112 is in the opened condition or the closed condition; the detection part (such as the measuring part 7, the light sensor 9, and the metal sensor 8) for detecting whether the article placed on the placing part 116 of the container charging part 110 is a collection object or a non-collection object; and the control part 1 as a driving control part. The control part 1 as the driving control part performs control to cause the outer door 111 to be in the opened condition when collecting the article. The control part 1 (such as second driving control part) has a driving control part for performing, when the determination part determines that a collection object has been placed on the placing part on the basis of a detection result of the detection means, control to cause the outer door 111 to be in the closed condition and the inner door 112 to be in the opened condition so that the storage part collects an article as a collection object, and performing, when the determination part determines that a non-collection object has been placed on the placing part 116 and when the non-collection object has not been rejected for a predetermined time or more, control to cause the inner door 112 to remain in the closed condition and outer door 111 to be in the closed condition.

In other words, during initial standby, the outer door 111 is in the closed condition and the inner door 112 is in the closed condition, and when collection is started, the condition of the outer door 111 becomes the opened condition while the inner door 112 is maintained to be in the closed condition. When a predetermined time or more (for example, 1 minute or more) has elapsed since a non-collection object such as a foreign object was placed on the placing part 116 of the container charging part 110, the condition of the outer door 111 becomes the closed condition. An empty container collection device capable of preventing mixture of another non-collection object (foreign object) can be provided.

In the case where the empty container collection device is installed outdoors, even when a non-collection object is placed on the placing part, the condition of the outer door becomes the closed condition after a short predetermined time elapses. Thus, an empty container collection device in which the possibility of entry of rainwater is small can be provided.

The control part 1 in the empty container collection device 100 as an article collection device according to the embodiment of the present invention has an notification part (notification process part) for notification, when the determination part determines that a non-collection object has been placed on the placing part, such that the non-collection object is rejected from the container charging part. Specifically, for example, the control part 1 performs an notification process for displaying the fact that the non-collection object has been detected on the display operation part 3. The control part 1 performs an notification process for displaying notice to prompt the user to reject the non-collection object from the container charging part on the display operation part 3.

The control part 1 in the empty container collection device 100 as an article collection device according to the embodiment of the present invention has a notification part (in this embodiment, the notification process part 105 in the control part 1, the display operation part 3) for notification, when the determination part determines that a non-collection object has been placed on the placing part, such that the non-collection object is rejected from the placing part. Specifically, when a non-collection object is detected by the detection part, the control part 1 displays notice on the display part of the display operation part 3 so as to reject the non-collection object from the container charging part. In other words, there can be provided a compact empty container collection device having a simple structure, which is capable of eliminating the need of storing a non-collection object in the device main body by prompting the user to reject the non-collection object from the container charging part 110.

The notification part in the empty container collection device 100 according to the embodiment of the present invention notifies an external terminal device of the above notification. In other words, for example, the above-mentioned notification can be performed by an external terminal device in a store. The above-mentioned notification can be performed by a host server as an external terminal device.

While the embodiment of the present invention has been described above in detail with reference to the drawings, the specific configuration is not limited to the embodiment, and design changes within the range not departing from the gist of the present invention are included in the present invention.

The contents of the embodiments described above with reference to the drawings can be combined unless the objects and configurations thereof particularly conflict or cause a problem.

The contents illustrated in the drawings can be independent embodiments, and the embodiments of the present invention are not limited to one embodiment obtained by combining the drawings.

The above-mentioned empty container collection device according to the embodiment of the present invention includes the volume reduction part (volume reduction mechanism) for reducing the volume of an empty container, but is not limited to this embodiment. For example, the empty container collection device is not necessarily required to include the volume reduction mechanism, and a charged empty container to be collected may be collected as it is.

In the above-mentioned embodiment, the empty container collection device collects an empty container such as a PET bottle. However, the empty container collection device may be configured to collect an aluminum can or a steel can, and may be a device serving also to collect a PET bottle, an aluminum can, or a steel can.

### [Reference Signs List]

1 Control part
2 Memory part
3 Display operation part
4 Transmit and receive part
5 Outer door driving part
6 Inner door driving part
7 Measuring part
8 Metal sensor
9 Light sensor
71 Passage
10 Door position sensor
11 Door lock part
100 Empty container collection device (article collection device (container volume reduction device))
100B Device main body
110 Container charging part (article charging part)
111 Outer door
112 Inner door
116 Placing part
120 Volume reduction part (volume reduction mechanism)
140 Container storage part (storage part)

## Claims

1. An article collection device, comprising:
a device main body including a storage part for storing an article therein;
a placing part capable of placing an article thereon;
an outer door provided on an outer side of the placing part;
an inner door provided in a passage passing from the placing part to the storage part in the device main body;
an inner door driving part for driving the inner door to be opened and closed;
detection means provided to the placing part, for detecting an article placed on the placing part; and
a control part,
wherein the control part includes a determination part for determining whether the article is a collection object on the basis of a detection result of the detection means.

2. The article collection device according to claim 1, wherein
the detection means includes a mass detection part provided to the placing part, for detecting a mass of the article placed on the placing part, and
the determination part determines whether the article is a collection object on the basis of the mass of the article placed on the placing part detected by the mass detection part.

3. The article collection device according to claim 1 or 2, wherein the control part includes a driving control part for controlling driving of the inner door driving part such that, when the determination part determines that the article is not the collection object, the closed condition of the inner door is maintained, and controlling driving of the inner door driving part such that, when the determination part determines that the article is the collection object, the inner door is in the opened condition.

4. The article collection device according to claim 1 or 2, comprising an outer door driving part for driving the outer door to be opened and closed,
wherein the control part includes a driving control part for performing, when the determination part determines that a collection object has been placed on the placing part on the basis of a detection result of the detection means, control to cause the outer door to be in the closed condition and the inner door to be in the opened condition so that the storage part collects an article as a collection object, and performing, when the determination part determines that a non-collection object has been placed on the placing part and when the non-collection object has not been rejected for a predetermined time or more, control to cause the inner door to remain in the closed condition and the outer door to be in the closed condition.

5. The article collection device according to claim 4, wherein the control part includes an notification part for notification, when the determination part determines that a non-collection object has been placed on the placing part, such that the non-collection object is rejected from the placing part.

6. The article collection device according to claim 5, wherein the notification part notifies an external terminal device of the notification.
